# EUROPÄISCHE PATENTSCHRIFT

(11) **EP 0 255 572 B1**
(45) Veröffentlichungstag und Bekanntmachung des Hinweises auf die Patenterteilung: **21.12.1994**
(21) Anmeldenummer: 87106072.9
(22) Anmeldetag: 25.04.1987
(51) Int. Cl.: C08G 18/10, C09J 175/04

(54) **Einkomponenten-Klebstoff- und/oder Dichtstoffmasse, welche bei Temperaturen bis 30 oC lagerstabil und pumpbar ist.**
One-component storage-stable adhesive and/or sealant pumpable at up to 30 degrees C.
Adhésif et/ou agent d'étanchéité en un composant, stable au stockage et pompable jusqu'à 30 degrés C.

(30) Priorität: 04.08.1986 CH 3124/86
(43) Veröffentlichungstag der Anmeldung: 10.02.1988
(73) Patentinhaber: Sika AG, vorm. Kaspar Winkler & Co., CH-8048 Zürich (CH)
(72) Erfinder: Tschan, Hans-Peter, D-8154 Oberglatt (CH); Zabel, Lutz-Dieter, D-8903 Birmensdorf (CH); Pfenninger, Ueli, D-8804 Au (CH)
(74) Vertreter: Blum, Rudolf Emil Ernst

(56) Entgegenhaltungen:
- EP-A- 0 062 598
- FR-A- 2 389 666
- US-A- 4 185 718
- US-A- 4 247 676

## Beschreibung

Die vorliegende Erfindung betrifft eine Einkomponenten-Klebstoff- und/oder Dichtstoffmasse, welche bei Temperaturen bis 30°C lagerstabil und pumpbar ist, ein Verfahren zur Herstellung dieser Masse, sowie die Verwendung dieser Masse zum Verkleben und/oder Abdichten von einem oder mehreren Materialien gleicher oder ungleicher Beschaffenheit zu einem Verbund.

Polyurethan-Klebstoffe kennt man als Einkomponenten-Systeme, feuchtigkeitshärtend oder wärmehärtend, als Zweikomponenten-Systeme oder als Schmelzklebstoffe (Hot Melts).

In den US-Patentschriften Nrn. 3 933 725 und 3 707 521 werden durch Umsetzung von Diphenylmethandiisocyanat mit Polyoxypropylendiolen und Polyoxypropylentriolen in ein- oder zweistufigen Verfahren die Herstellung härtbarer Polyurethane beschrieben.

Die auf diese Weise erhaltenen Produkte können nun direkt oder, wie in der deutschen Offenlegungsschrift Nr. 30 19 356 beschrieben, durch Zugabe von latenten Härtern, z.B. Aldiminen oder Oxazolidinen, zu einer feuchtigkeitshärtenden Einkomponenten-Klebmasse verarbeitet werden. Durch Umsetzung mit Blockierungsmitteln für Isocyanatgruppen, z.B. Phenole, Caprolactame, Ketoxime und Malonsäureester, wie in den deutschen Offenlegungsschriften Nrn. 29 46 085, 25 42 500, 25 50 156 und 29 29 224 beschrieben, werden wärmehärtbare Einkomponenten-Systeme erhalten.

Bei Zweikomponenten-Systemen werden die oben beschriebenen Massen nicht mit Hilfe der Luftfeuchtigkeit gehärtet, sondern indem man sie mit einer zweiten Komponente, die einen Härter (z.B. Diamin, Diol oder Aminoalkohol) enthält, mischt.

Solche Systeme sind in den US-Patentschriften Nrn. 3 228 914 und 3 114 734 und dem europäischen Patent Nr. 0 153 456 beschrieben.

Einkomponenten-Systeme sind sehr einfach zu handhaben, da kein Mischprozess vor der Applikation nötig ist.

Bei Zweikomponenten-Systemen müssen gewöhnlich die beiden Komponenten in genau stöchiometrischen Mischungsverhältnissen vorliegen und eine gute Durchmischung gewährleistet sein. Der Nachteil einer feuchtigkeitshärtenden Masse liegt darin, dass die Aushärtung relativ langsam von den äusseren Schichten nach innen erfolgt und dadurch der zu verklebende Teil unter Umständen für längere Zeit fixiert werden muss. Bei zweikomponentigen Klebemassen erfolgt die Härtung in der gesamten Masse gleichzeitig. Eine hohe Festigkeit direkt nach der Applikation, wie sie als Aufgabe der Erfindung zugrunde lag, wird jedoch auch nicht erreicht.

Die blockierten Systeme haben den Nachteil, dass die verklebte Anordnung auf eine Temperatur von 80 - 200°C erwärmt werden muss, um eine Aushärtung der Klebemasse zu erreichen. Dieser Aufheizvorgang der zum Teil grossflächigen Teile kann speziell bei Bandproduktionen in der Industrie nicht immer realisiert werden.

Eine weitere Gruppe von Polyurethanklebemassen stellen die Schmelzkleber (Hot Melts) dar.

Sie setzen sich aus thermoplastischen Materialien zusammen, die zur Verarbeitung auf 90 - 200°C erhitzt und als flüssige Masse appliziert werden. Beim Erkalten erstarrt die Masse wieder und bildet rasch eine feste Verklebung.

Man unterscheidet zwischen nichtreaktiven und reaktiven Schmelzklebern.

Die nichtreaktiven Hot Melts haben den Nachteil, dass, bedingt durch ihr thermoplastisches Verhalten, ihre mechanischen Eigenschaften stark temperaturabhängig sind. Bei erhöhter Temperatur erweichen sie wieder und neigen bei tiefen Temperaturen zur Versprödung, weshalb sie nur in einem engen Temperaturbereich eingesetzt werden.

Die reaktiven Hot Melts zeichnen sich dadurch aus, dass die Masse freie reaktionsfähige Isocyanatgruppen enthält, die nach der Applikation mit der Luftfeuchtigkeit eine Vernetzung ermöglichen, und somit eine elastische Masse entsteht, welche nicht mehr aufschmelzbar ist.

Man findet die Herstellung und Zusammensetzung solcher reaktiven Schmelzkleber in der DE-PS Nr. 24 01 320 und der DE-OS Nr. 32 36 313.

Diese reaktiven Schmelzkleber sind jedoch beim Auftrag wenig standfest, so dass bei Auftragsdicken von mehr als 2 mm die noch heisse Masse wegfliesst. Ihr Einsatz ist somit auf bestimmte Anwendungsgebiete begrenzt. Ein Einkleben einer Autoscheibe ist z.B. mit solchen Klebern nicht durchführbar.

Ein weiterer Nachteil stellt das Aufschmelzen der Masse vor der Applikation dar. Das meist in Fässern oder 20 - 30 Liter Gebinden angelieferte feste Produkt muss, bevor es gefördert und aufgetragen werden kann, mit einer heizbaren Platte von oben aufgeschmolzen und direkt durch heizbare Schläuche gefördert werden. Die Heizleistung der Platte, d.h. wieviel Kleber pro Zeiteinheit geschmolzen wird, bestimmt die maximale Fördermenge. Dabei darf das Material wegen der thermischen Zersetzung nicht überhitzt werden. Die maximale Fördermenge von guten optimal eingestellten Pumpenanlagen betragen 800 g - 1000 g/min. aus einem Fass (200 Liter) und 400 - 500 g/min. aus einem 20 - 30 Liter Gebinde.

In der USA Patentschrift 4 247 676 werden lagerfähige flüssige Zusammensetzungen auf Basis eines Polyurethan-Prepolymeren mit einem Ueberschuss von 3-15% an freien Isocyanatgruppen in diesm Prepolymeren und einem Härter beschrieben. Der Härter ist ein Härter auf Basis eines verkappten Diamines, nämlich ein Komplex eines Natrium-, Kalium- und/oder Lithiumsalzes mit 4,4'-Diphenylmethan-Diamin.

Im Anspruch 1 ist zwar definiert, dass pro Aequivalent der freien Isocyanatgruppen 0,85 - 1,15 Aequivalente des verkappten Härters und vorzugsweise pro Aequivalent der freien Isocyanatgruppen des Prepolymers 0,95-1,05 Aequivalente des Aminhärters anwesend sein sollen (siehe Spalte 3, Zeilen 41 - 44).

Aus der Gesamtheit der Beispiele dieser Patentschrift ist aber ersichtlich, dass in der Zusammensetzung pro Aequivalent an freien Isocyanatgruppen im Prepolymer etwa ein Aequivalent des verkappten Aminhärters anwesend sein muss, damit nach der Erhitzung der Mischung auf die Aktivierungstemperatur des verkappten Härters eine vollständige Aushärtung, beziehungsweise Vernetzung der Zusammensetzung erfolgt. Es sei in diesem Zusammenhang insbesondere auf Spalte 2, Zeilen 9 - 11, verwiesen, wo klargelegt wird, dass nach der Erhitzung der Zusammensetzung auf die Aktivierungstemperatur des Härters die vollständige Aushärtung im allgemeinen während einer Minute bis 24 Stunden stattfindet.

Eine derartige vollständige Aushärtung der Zusammensetzung verlangt, dass pro Aequivalent der freien Isocyanatgruppen des Prepolymers in etwa ein Aequivalent des verkappten Härters anwesend ist.

Das Ziel der vorliegenden Erfindung besteht darin, die oben genannten Nachteile zu beseitigen. Es soll eine neue Einkomponenten-Klebstoff und/oder Dichtstoffmasse zur Verfügung gestellt werden, welche billig, einfach herstellbar und einfach anwendbar ist. Die erfindungsgemässe Masse soll bei Temperaturen bis 30° C lagerstabil und pumpbar sein. Sie soll auch die zu verklebenden und/oder abzudichtenden Materialien gleicher oder verschiedener Beschaffenheit innert möglichst kurzer Zeit, z.B. innerhalb einer Zeitspanne von 2 Minuten nach dem Auftragen, fixieren. Die neue Masse soll beim Auftragen im warmen Zustand ebenfalls standfest sein. Ebenso soll die Durchhärtung, resp. die vollständige Vernetzung, innert kürzester Zeit erfolgen. Die verklebten und/oder abgedichteten Teile sollen nach 1 bis 24 Stunden voll belastbar sein.

Völlig überraschend ist gefunden worden, dass es mit den erfindungsgemässen Massen gelungen ist, oben genannte Vorteile von bekannten Einkomponenten-Klebemassen mit oben genannten Vorteilen von bekannten reaktiven Schmelzklebstoffen zu kombinieren.

Ein Gegenstand der vorliegenden Erfindung ist daher eine Einkomponenten-Klebstoff und/oder Dichtstoffmasse, die bei Temperaturen bis 30° C lagerstabil und pumpbar ist,
auf Basis eines Polyurethanprepolymers, welches 0,1 - 15 Gew.-%, bezogen auf das Prepolymer, an freien reaktionsfähigen Isocyanatgruppen enthält und wenigstens eines mit Wärme aktivierbaren Härters mit wenigstens zwei gleichen oder verschiedenen Wasserstoff enthaltenden funktionellen Gruppen,
die dadurch gekennzeichnet ist, dass das stöchiometrische Verhältnis zwischen den freien Isocyanatgruppen des Prepolymers und dem Härter 20:1 bis 1,05:1 beträgt, sodass bei einer Erwärmung auf 60° C bis 180° C lediglich eine Teilvernetzung möglich ist, und ein Produkt mit hochviskosen bis plastischen Eigenschaften entsteht.

Bevorzugte Ausführungsformen der erfindungsgemässen Massen sind in den abhängigen, auf diese Masse gerichteten Ansprüche definiert.

Die erfindungsgemässen Massen können zusätzlich noch
- wenigstens einen Weichmacher, und/oder
- wenigstens ein Thixotropiermittel, und/oder
- wenigstens einen Füllstoff, und/oder
- wenigstens einen Hilfs- bzw. Zusatzstoff enthalten.

Bevorzugt sind dabei solche Massen, in welchen
- der Weichmacher ausgewählt ist aus der Gruppe, bestehend aus Phthalaten, wie etwa Dibutyl-, Dioctyl-, Dicyclohexyl-, Diisooctyl-, Diisodecyl-, Dibenzyl- oder Butylbenzylphthalat, Phosphaten, wie Trioctylphosphat oder Diphenyloctylphosphat, Adipaten, wie Dioctyladipat oder Benzyloctyladipat, Sulfonsäureestern, Sulfonamiden, Chlorparaffinen, Polybutenen,
- das Thixotropiermittel ausgewählt ist aus der Gruppe, bestehend aus Acrylatderivaten, Harnstoffderivaten, Kieselsäurederivaten, gefällten Kreiden, PVC, Russ,
- der Füllstoff ausgewählt ist aus der Gruppe, bestehend aus Kreiden, Kaolinen, Metallpulvern, Talkum,
- der Hilfs- bzw. Zusatzstoff ausgewählt ist aus
   a) Haftvermittlern, insbesondere silanhaltigen Verbindungen, welche zusätzlich noch wenigstens eine reaktive Gruppe, wie Amin-, Epoxy-, Isocyanant-, Mercaptogruppen, usw. enthalten,
   b) üblichen Polyurethankatalysatoren, wie Blei und/oder Zinnverbindungen und/oder tert. Amine,
   c) latenten Härtern, wie Aldimine, Ketimine, Oxazolidine,
   d) Farbstoffen oder Pigmenten,
   e) UV-Absorbtionsmitteln und/oder Stabilisatoren, wie Antioxidantien, Lichtschutzmitteln,
   f) oberflächlichen Zusatzstoffen,
   g) Flammschutzmitteln, und
   h) fungistatisch und/oder bakteriostatisch wirkenden Substanzen.

Das in den erfindungsgemässen Massen enthaltene Polyurethanprepolymer, das 0,1-15 Gew.-% an freien reaktionsfähigen Isocyanatgruppen, bezogen auf das Prepolymer, aufweist, ist vorzugsweise aufgebaut aus
a) aromatischen Diisocyanaten, wie z.B. 4,4'-Diphenylmethandiisocyanat, 2,4-Toluoldiisocyanat, Naphthylen-1,5-diisocyanat, 1,3- und 1,4-Phenylendiisocyanat, Triphenylmethan-4,4',4''-triisocyanat, Polyphenyl-polymethylen-polyisocyanaten und/oder
b) aliphatischen oder cycloaliphatischen Diisocyanaten, wie z.B. Hexamethylen-diisocyanat, 1,12-Dodecandiisocyanat, Cyclobutan-1,3-diisocyanat, Cyclohexan-1,3- und -1,4-diisocyanat, 1-Isocyanato-3,3,5-trimethyl-5-isocyanatomethylcyclohexan, 2,4- und 2,6-Hexahydrotoluylendiisocyanat, Hexahydro-1,3- und -1,4-phenyldiisocyanat, Perhydro-2,4'- und -4,4'-diphenylmethandiisocyanat, und
c) Polyolen mit einem Molekulargewichtsbereich von 400 bis 10'000, vorzugsweise von 1'000 - 6'000, wie z.B. linearen oder verzweigten Polyacrylaten, Polybutadienen, Polycarbonaten, Polycaprolactonen, Polycaprolactamen, Polyethern, Polyestern, Polymethacrylaten, Polythioethern, Polyurethanan, mit jeweils wenigstens zwei endständigen primären und/oder sekundären OH-Gruppen.

Der in der erfindungsgemässen Masse enthaltene, mit Wärme aktivierbare Härter weist wenigstens zwei gleiche oder verschiedene, Wasserstoff enthaltende funktionelle Gruppen auf, die mit den freien, reaktionsfähigen Isocyanatgruppen des Prepolymers, vorzugsweise bei Temperaturen oberhalb von 50°C, umsetzbar sind.

In den erfindungsgemässen Massen ist das stöchiometrische Verhältnis zwischen Prepolymer und Härter und deren Wahl derart abgestimmt, dass die beiden genannten Komponenten bei Temperaturen bis 30° C, insbesondere bei Raumtemperatur, nicht miteinander reagieren, aber bei erhöhter Temperatur im Bereich von 60°C bis 180°C eine Teilvernetzung ermöglicht wird. Durch diese Teilvernetzung wird ein Produkt erhalten, welches bei Raumtemperatur je nach Vernetzungsgrad hochviskose bis plastische Eigenschaften aufweist. Durch die anschliessende Einwirkung von Wasser, vorzugsweise Wasserdampf, z.B. Luftfeuchtigkeit, wird die vollständige Vernetzung erreicht.

Durch diese vollständige Vernetzung wird ein Produkt erhalten, welches elastische Eigenschaften aufweist.

Mit der durch Wärmeeinwirkung erreichten Teilvernetzung wird eine anfänglich bei Raumtemperatur pump- und förderbare Masse in ein Produkt mit thermoplastischen Eigenschaften übergeführt. Dieses Produkt ist, wenn es auf Raumtemperatur abgekühlt ist, weder pumpbar noch förderbar. Bei erhöhter Temperatur, vorzugsweise im Bereich von 90°C bis 110°C, ist dieses Produkt aber förderbar, und vorzugsweise auch standfest. Es kann in ervärmter Form direkt appliziert werden. Diese Masse stellt in dieser Form einen in situ hergestellten reaktiven Schmelzklebstoff dar. Dadurch entfällt das bei bekannten reaktiven Schmelzklebstoffen immer notwendige Aufschmelzen. Daraus resultiert eine Kostensenkung, eine Vereinfachung des Applikationsprozesses und eine Erhöhung der Fördermenge pro Zeiteinheit.

Durch die Wahl des Prepolymers oder des Prepolymer-Gemisches und/oder des Härters oder des Härter-Gemisches können die Eigenschaften des teilvernetzten sowie des vollständig vernetzten Produktes bestimmt werden. Durch Verwendung von Weichmachern, Thixotropiermitteln, Füllstoffen, Hilfsstoffen, Zusatzstoffen und weiteren Additiven können die Eigenschaften des teilvernetzten sowie des vollständig vernetzten Produktes ebenfalls beeinflusst werden.

Mit zwei, bei verschiedenen Temperaturen aktivierbaren Härtern kann auch eine durch reine Wärmeeinwirkung vollständig vernetzbare Masse erhalten werden. Mit dem bei der tieferen Temperatur, z.B. 60° bis 100°C, aktivierbaren Härter wird die oben erwähnte Teilvernetzung erreicht, und mit dem bei höherer Temperatur, z.B. 130° bis 200°C, aktivierbaren Härter wird die oben erwähnte vollständige Vernetzung erreicht.

Es besteht auch die Möglichkeit, dass durch geeignete Wahl an Härtern und deren Menge die vollständige Vernetzung durch eine Kombination von Einwirkung von Wasser, vorzugsweise Wasserdampf, z.B. Luftfeuchtigkeit, und durch Anwendung von Wärme, z.B. 130°C bis 200°C, erreicht werden kann.

Die erfindungsgemässen Massen sind wie oben erwähnt lagerstabil, z.B. während 9 bis 12 Monaten bei einer Temperatur von 20 bis 30°C.

Selbstverständlich müssen die erfindungsgemässen Massen unter Feuchtigkeitsausschluss aufbewahrt werden.

Die in den erfindungsgemässen Massen verwendeten Härter - auch Vernetzer genannt - sind vorzugsweise erst bei Temperaturen oberhalb etwa 50°C aktivierbar.

Gemäss einer bevorzugten Ausführungsform wird der mit Wärme aktivierbare Härter mit wenigstens zwei gleichen oder verschiedenen, Wasserstoff enthaltenden funktionellen Gruppen erst durch Zufuhr von Wärme mittels Aktivierung, Freisetzung, Schmelzung oder Auflösung zur Reaktion gebracht. Besonders geeignet sind solche Härter, bei denen nach der Wärmezufuhr die Umsetzung in ihre reaktionsfähige Form sowie die Reaktion mit den freien Isocyanatgruppen des Prepolymers sehr schnell abläuft. Als Beispiele seien genannt:

Dicyandiamid oder das Natriumchlorid-Komplex-Salz von 4,4'-Diaminodiphenylmethan.

Insbesondere sei auf den folgenden Vorteil hingewiesen, welcher mit den erfindungsgemässen Massen erzielt werden kann: bei einem vollständigen oder teilweisen Ausfall der Heizung in einer Verarbeitungsvorrichtung können die erfindungsgemässen Massen durch Einwirkung von Wasser, vorzugsweise Wasserdampf, z.B. Luftfeuchtigkeit, vollständig aushärten.

Die erfindungsgemässen Massen werden vorzugsweise in grosstechnischen Anlagen, z.B. Produktionsstrassen, eingesetzt. Dabei werden die erfindungsgemässen Massen aus einem Vorratsgefäss bei Raumtemperatur unter Feuchtigkeitsausschluss mit bekannten Einkomponenten-Pumpen-Systemen gepumpt, anschliessend über einen heizbaren Schlauch gefördert, worin die Teilvernetzung stattfindet, und anschliessend heiss auf die zu verklebende und/oder abzudichtenden Materialien appliziert.

Ein bevorzugter Anwendungsbereich der erfindungsgemässen Massen ist der Einbau resp. das Verkleben von Fahrzeugscheiben.

Das erfindungsgemässe Verfahren zur Herstellung der erfindungsgemässen Einkomponenten-Klebstoff- und/oder Dichtstoffmasse ist dadurch gekennzeichnet, dass man unter wasserfreien Bedingungen das Polyurethan-prepolymere, welches 0,1 bis 15 Gew.-% an freien, reaktionsfähigen Isocyanatgruppen, bezogen auf das Prepolymer enthält, vorlegt und bei Temperaturen bis maximal 40°C mit dem mindestens einen mit Wärme aktivierbaren Härter homogen vermischt, wobei ein stöchiometrisches Verhältnis zwischen den freien reaktionsfähigen Isocyanatgruppen des Prepolymeren und dem Härter von 20:1 bis 1,05:1 eingehalten wird, sodass bei einer Erwärmung der Masse auf Temperaturen von 60°C bis 180°C lediglich eine Teilvernetzung des Propolymeren unter Ausbildung eines bei Raumtemperatur hochviskosen bis plastischen Produktes erfolgt.

Bevorzugte Ausführungsformen des erfindungsgemässen Verfahrens sind in den abhängigen Verfahrensansprüchen definiert.

Des weiteren betrifft die vorliegende Erfindung ein Verfahren zum Verkleben und/oder Abdichten von einem oder mehreren Materialien gleicher oder ungleicher Beschaffenheit zu einem Verbund, unter Verwendung der erfindungsgemässen Einkomponenten-Klebstoff- und/oder Dichtstoffmasse, das dadurch gekennzeichnet ist, dass nach der Aufbringung die vollständige Aushärtung des teilvernetzten Produktes entweder
a) durch die Reaktion des teilvernetzten Produktes mit Wasser und/oder
b) bei allfälliger Anwesenheit eines weiteren mit Wärme aktiverbaren Härters, dessen Aktivierungstemperatur oberhalb derjenigen des ersten wärmeaktivierbaren Härters liegt, durch einen nachfolgenden Erhitzungsschritt erfolgt,
   wobei die vollständig ausgehärtete Masse elastische Eigenschaften aufweist.

Bevorzugte Ausführungsformen dieses Verfahrens zum Verkleben und/oder Abdichten sind in dem abhängigen Verfahrensanspruch definiert.

Die erfindungsgemässen Einkomponenten-Klebstoff und/oder Dichtstoffmassen können zum Verkleben und/oder Abdichten von einem oder mehreren Materialien gleicher oder ungleicher Beschaffenheit zu einem Verbund verwendet werden.

Des weiteren betrifft die vorliegende Erfindung die Verwendung der erfindungsgemässen Einkomponenten-Klebstoff und/oder Dichtstoffmasse, die dadurch gekennzeichnet ist, dass die zu verklebenden und/oder abzudichtenden Materialien aus der Gruppe ausgewählt sind, die Glas, Metall, Metallegierungen, Kunststoff, Baumaterialien, sowie Holz umfasst, wobei die Masse vorzugsweise zum Einkleben, beziehungsweise für das Verkleben von Fahrzeugscheiben verwendet wird.

Bevorzugte Verwendungen der erfindungsgemässen Massen sind in den abhängigen Verwendungsansprüchen definiert.

Die nachfolgenden Beispiele dienen der Illustration der Erfindung.

### Beispiel 1

a) Prepolymer: Einer Mischung aus 2500 g eines Polyethertriols mit einem mittleren Molekulargewicht von 4700, 2900 g eines Polyetherdiols mit einem mittleren Molekulargewicht von 2000 und 1800 g Diisooctylphthalat werden nacheinander unter Rühren 50 g eines 5 %-igen 1,4-Diazobicyclo[2.2.2.]octan (DABCO) in Diisooctylphthalat-Lösung und 630 g 2,4-Toluoldiisocyanat zugefügt. Das Reaktionsgemisch wird bei 80°C so lange gerührt bis der freie Isocyanat-Gehalt bei ca. 1,1 Gew.-% konstant bleibt.
b) Prepolymer/Härter-Gemisch: 1000 g des oben beschriebenen Prepolymers werden bei 20°C mit 18 g des Natriumchlorid-Komplex-Salzes von 4,4'-Diaminodiphenylmethan 50 %-ig in DOP (Caytur 21 Handelsbezeichnung von Uniroyal Chemical) unter Vakuum homogen gemischt.

Wird nun diese gut giessbare, bei 25°C lagerstabile Masse mit einer Viskosität von ca. 15 Pa·s auf 100°C erwärmt, erhält man eine bei 100°C hochviskose und bei 20°C zuerst klebrige, plastische Masse, die jedoch mit der Luftfeuchtigkeit zu einem trockenen, elastischen Produkt weiterreagiert.

### Beispiel 2

3700 g des nach Beispiel 1 hergestellten Prepolymers werden in einem geeigneten Mischer oder Kneter mit 700 g getrocknetem Russ, 600 g getrocknetem Kaolin, 30 g einer silanhaltigen Verbindung und mit 4 g einer Dibutylzinndilauratlösung unter Vakuum homogen vermischt. Danach wird die Mischung auf 20°C abgekühlt. Bei 20°C werden dann 66 g Caytur 21 homogen eingemischt. Man erhält eine gut verarbeitbare, nicht fliessende,bei 25°C lagerstabile und pumpbare Masse. Wird diese Masse nun so durch einen geheizten Schlauch (z.B. ℓ = 6m, φ 10 mm) gepumpt, dass die Austrittstemperatur 90 - 100°C beträgt, erhält man eine immer noch gut verarbeitbare, standfeste, klebrige Masse, die nach dem Abkühlen anfassbar und plastisch verformbar ist. Mit Luftfeuchtigkeit härtet sie zu einer Klebe- und Dichtstoffmasse von guter Elastizität, hoher Zugfestigkeit (>6N/mm²) und guten Hafteigenschaften auf Glas und diversen Metallen. Zug-/Scher-Versuche auf Glas und Aluminium ergaben einen 100 %-igen kohäsiven Bruch.

## Patentansprüche

1. Einkomponenten-Klebstoff und/oder Dichtstoffmasse, die bei Temperaturen bis 30°C lagerstabil und pumpbar ist,
auf Basis eines Polyurethanprepolymers, welche 0,1 - 15 Gew.-%, bezogen auf das Prepolymer, an freien reaktionsfähigen Isocyanatgruppen enthält und wenigstens eines mit Wärme aktivierbaren Härters mit wenigstens zwei gleichen oder verschiedenen Wasserstoff enthaltenden funktionellen Gruppen,
dadurch gekennzeichnet, dass das stöchiometrische Verhältnis zwischen den freien Isocyanatgruppen des Prepolymers und dem Härter 20:1 bis 1,05:1 beträgt, sodass bei einer Erwärmung auf 60° C bis 180° C lediglich eine Teilvernetzung möglich ist, und ein Produkt mit hoch-viskosen bis plastischen Eigenschaften entsteht.

2. Masse nach Anspruch 1, dadurch gekennzeichnet, dass das stöchiometrische Verhältnis zwischen den freien reaktionsfähigen Isocyanatgruppen des Prepolymers und dem mindestens einen durch Erwärmung der Masse auf 60° C bis 180° C aktivierbaren Härter 10:1 bis 2:1 beträgt.

3. Masse nach Anspruch 1 oder 2, dadurch gekennzeichnet, dass sie zwei wärmeaktivierbare Härter enthält, wobei der eine dieser Härter bei einer Temperatur von 60°C bis 100° C aktivierbar und der andere der beiden Härter bei einer Temperatur von 130° C bis 200° C aktivierbar ist, und dass der bei der tieferen Temperatur aktivierbare Härter in einem stöchiometrischen Verhältnis zwischen den freien, reaktionsfähigen Isocyanatgruppen des Propolymers zu dem Härter von 20:1 bis 1,05:1 vorliegt.

4. Masse nach einem der Ansprüche 1 bis 3, dadurch gekennzeichnet, dass das Prepolymer in einer Menge von 10 bis 95 Gew.-%, vorzugsweise 40 bis 70 Gew.-%, bezogen auf das gesamte Gewicht der Masse, vorhanden ist.

5. Masse nach einem der Ansprüche 1 bis 4, dadurch gekennzeichnet, dass sie zusätzlich noch
- wenigstens einen Weichmacher, vorzugsweise in einer Menge von 5 bis 30 Gew.-%, insbesondere in einer Menge von 10 - 20 Gew.-%, und/oder
- wenigstens ein Thixotropiermittel, vorzugsweise in einer Menge von 3 - 30 Gew.-%, insbesondere in einer Menge von 10 - 20 Gew.-%, und/oder wenigstens einen Füllstoff, vorzugsweise in einer Menge von 5 bis 50 Gew.-%, insbesondere in einer Menge von 10 bis 20 Gew.-%, und/oder
- wenigstens einen Hilfs-, beziehungsweise Zusatzstoff, vorzugsweise in einer Menge von 0,01 bis 7 Gew.-%,
enthält, wobei sich die genannten Prozentangaben auf die gesamte Masse beziehen.

6. Masse nach einem der Ansprüche 1 bis 5, dadurch gekennzeichnet, dass das Polyurethanprepolymer, das 0,1 bis 15 Gew% an freien reationsfähigen Isocyanatgruppen bezogen auf das Prepolymer aufweist aus den folgenden Komponenten aufgebaut ist:
a) aromatischen Diisocyanaten und/oder
b) aliphatischen oder cycloaliphatischen Diisocyanaten, und
c) Polyolen mit einem Molekulargewichtsbereich von 400 bis 10'000, vorzugsweise von 1'000 bis 6'000, mit jeweils wenigstens zwei endständigen primären und/oder sekundären OH-Gruppen.

7. Masse nach einem der Ansprüche 1 bis 6, dadurch gekennzeichnet, dass sie als Härter Dicyandiamid oder das Natriumchlorid-Komplex-Salz von 4,4'-Diaminodiphenylmethan enthält.

8. Verfahren zur Herstellung der Einkomponenten-Klebstoff- und/oder Dichtstoffmasse, gemäss Anspruch 1, dadurch gekennzeichnet, dass man unter wasserfreien Bedingungen das Polyurethanprepolymere, welches 0,1 bis 15 Gew.-% an freien, reaktionsfähigen Isocyanatgruppen, bezogen auf das Prepolymer enthält, vorlegt und bei Temperaturen bis maximal 40° C mit dem mindestens einen mit Wärme aktivierbaren Härter homogen vermischt, wobei ein stöchiometrisches Verhältnis zwischen den freien reaktionsfähigen Isocyanatgruppen des Prepolymeren und dem Härter von 20:1 bis 1,05:1 eingehalten wird, sodass bei einer Erwärmung der Masse auf Temperaturen von 60° C bis 180° C lediglich eine Teilvernetzung des Prepolymeren unter Ausbildung eines bei Raumtemperatur hochviskosen bis plastischen Produktes erfolgt.

9. Verfahren nach Anspruch 8, dadurch gekennzeichnet, dass man das Prepolymere vorlegt, es anschliessend mit wenigstens einem Weichmacher, und/oder wenigstens einem Thixotropiermittel, und/oder wenigstens einem Füllstoff, und/oder wenigstens einem Hilfs-, beziehungsweise Zusatzstoff homogen vermischt und danach bei Temperaturen bis maximal 40° C den wenigstens einen mit Wärme aktivierbaren Härter zugibt und ihn homogen vermischt.

10. Verfahren gemäss Anspruch 8 oder 9, dadurch gekennzeichnet, dass man eine Masse gemäss einem der Ansprüche 2 bis 7 herstellt.

11. Verfahren zum Verkleben und/oder Abdichten von einem oder mehreren Materialien gleicher oder ungleicher Beschaffenheit zu einem Verbund, unter Verwendung der Einkomponenten-Klebstoff- und/oder Dichtstoffmasse gemäs Anspruch 1, dadurch gekennzeichnet, dass nach der Aufbringung die vollständige Aushärtung des teilvernetzten Produktes entweder
a) durch die Reaktion des teilvernetzten Produktes mit Wasser und/oder
b) bei allfälliger Anwesenheit eines weiteren mit Wärme aktivierbaren Härters, dessen Aktivierungstemperatur oberhalb derjenigen des ersten wärmeaktivierbaren Härters liegt, durch einen nachfolgenden Erhitzungsschritt erfolgt,
wobei die vollständig ausgehärtete Masse elastische Eigenschaften aufweist.

12. Verfahren nach Anspruch 11, dadurch gekennzeichnet, dass man die Klebstoff- und/oder Dichtstoffmasse vor der Applikation auf eine Temperatur von 60°C bis 180°C, vorzugsweise 80°C bis 150°C, insbesondere 90°C bis 110°C, so lange erwärmt, bis die Masse durch die Teilvernetzung hochviskose bis plastische Eigenschaften, gemessen bei Raumtemperatur, aufweist, sie anschliessend auf die zu verklebenden und/oder abzudichtenden Materialien im genannten Temperaturbereich aufträgt, und dann die vollständige Aushärtung der teilvernetzten Masse durch die Einwirkung von Wasser, vorzugsweise Wasserdampf, durchführt und/oder falls in der Masse ein weiterer mit Wärme aktivierbarer Härter anwesend ist, dessen Aktivierungstemperatur oberhalb derjenigen des ersten wärmeaktivierbaren Härters liegt, durch eine nachfolgende Erhitzung durchführt, vorzugsweise auf eine Temperatur im Bereich von 130°C bis 200°C.

13. Verwendung der Einkomponenten-Klebstoff und/oder Dichtstoffmasse nach Anspruch 1, dadurch gekennzeichnet, dass die zu verklebenden und/oder abzudichtenden Materialien aus der Gruppe ausgewählt sind, die Glas, Metall, Metallegierungen, Kunststoff, Baumaterialien, sowie Holz umfasst, wobei die Masse vorzugsweise zum Einkleben, beziehungsweise für das Verkleben von Fahrzeugscheiben verwendet wird.

14. Verwendung nach Anspruch 13, dadurch gekennzeichnet, dass man eine Klebstoff- und/oder Dichtstoffmasse gemäss einem der Ansprüche 2 bis 7 verwendet.

## Claims

1. One-component adhesive and/or sealant material which is stable in storage and capable of being pumped at up to 30°C
- based on a polyurethane-prepolymer which contains 0.1 to 15% by weight, with respect to the pre-polymer, or free reactive isocyanate groups, and at least one heat-activated hardener, with at least two identical or different hydrogen-containing functional groups
characterised in that the stoichiometric ratio between the free isocyanate groups of the pre-polymer and the hardener amounts to 20:1 to 1.05:1 so that on heating to 60°C to 180°C only partial cross-linking is possible and a product with highly viscous or plastic characteristics is obtained.

2. Material according to claim 1, characterised in that the stoichiometric ratio between the free reactive isocyanate groups of the pre-polymer and the at least one hardener, activated by heating the material to 60° to 180°, amounts to 10:1 to 2:1.

3. Material according to claim 1 or 2, characterised in that it contains two heat-activated hardeners, the one of these hardeners being activated at a temperature of 60°C to 100°C and the other of the two hardeners being activated at a temperature of 130° to 200°C, and that the hardener which is activated at the lower temperature is present in a stoichiometric ratio between the free reactive isocyanate groups of the pre-polymer and the hardener of 20:1 to 1.05:1.

4. Material according to one of claims 1 to 3, characterized in that the pre-polymer is present in a quantity of 10 to 95% by weight, preferably 40 to 70% by weight in relation to the overall weight of the material.

5. Material according to one of claims 1 to 4, characterized in that it contains in addition
- at least one plasticiser, preferably in a quantity of 5 to 30% by weight, in particular in a quantity of 10 to 20% by weight, and/or
- at least one thixotropic agent, preferably in a quantity of 3 to 30% by weight, in particular in a quantity of 10 to 20% by weight, and/or
- at least one filler, preferably in a quantity of 5 to 50% by weight, in particular in a quantity of 10 to 20% by weight, and/or
- at least one auxiliary or additive material, preferably in a quantity of 0.01 to 7% by weight,
the stated percentages being in relation to the overall material.

6. Material according to one of claims 1 to 5, characterized in that the polyurethane pre-polymer which has 0.1 to 15% by weight of free reactive isocyanate groups, the percentage being in relation to the pre-polymer, is made up of the following components:
a) aromatic diisocyanates and/or
b) aliphatic or cycloaliphatic diisocyanates, and
c) polyols having a molecular weight range of 400 to 10,000, preferably of 1000 to 6000, with respectively at least two terminating primary and/or secondary OH groups.

7. Material according to one of claims 1 to 6 characterized in that the hardener is dicyandiamide or the sodium chloride complex salt of 4,4' diaminodiphenylmethane.

8. Method of manufacturing one-component adhesive and/or sealant material according to claim 1 characterized in that under anhydrous conditions the polyurethane pre-polymer containing 0.1 and 15% by weight in relation to the pre-polymer of free reactive isocyanate groups is present and is homogeneously mixed at temperatures up to a maximum of 40°C with at least one heat-activated hardener, a stoichiometric ratio between the free reactive isocyanate groups of the pre-polymer and the hardener of 20:1 to 1.05:1 being maintained, so that on heating of the mass to temperature of 60°C to 180°C only partial cross-linking of the pre-polymer is possible, with the formation of a product having highly viscous or plastic characteristics at room temperature.

9. Method according to claim 8 characterized in that the pre-polymer is obtained and is then mixed homogeneously with at least one plasticiser and/or at least one thixotropic agent and/or at least one auxiliary or additional material and thereupon at temperatures up to a maximum of 40°C at least one heat-activated hardener is added and homogeneously mixed with it.

10. Method according to claim 8 or 9 characterized in that there is produced a material according to one of claims 2 to 7.

11. Method of adhering and/or sealing one or more materials of the same or different character to form a bond using the one-component adhesive and/or sealant material according to claim 1, characterized in that after the application the full hardening or curing of the partially cross-linked product takes place either
a) by the reaction of the partially cross-linked product with water and/or
b) in the possible presence of a further heat-activated hardener of which the activating temperature is above that of the first heat activated hardener, by a subsequent heating step,
the fully cured material exhibiting elastic characteristics.

12. Method according to claim 11, characterized in that the adhesive and/or sealant material is heated to a temperature of 60°C to 180°C, preferably 80°C to 150°C and in particular 90°C to 110°C before being applied and for a period long enough until the mass exhibits by the partial cross-linking highly viscous or plastic characteristics, measured at room temperature, it is subsequently applied in the stated temperature range to the materials which are to be adhered and/or sealed, and then the complete hardening or curing of the partially cross-linked mass is carried out by the action of water, preferably water vapour, and/or, in the event that a further heat-activated hardener is present in the mass, of which the activating temperature is above that of the first heat-activated hardener, by subsequent heating, preferably to a temperature in the range from 130°C to 200°C.

13. Use of the one-component adhesive and/or sealant material according to claim 1, characterised in that the materials which are to be adhered and/or sealed are selected from the group including glass, metal, metal alloys, plastics, structural materials as well as wood, the material preferably being employed for sealing and adhesion of vehicle windows.

14. Use according to claim 13, characterised in that an adhesive and/or sealant material according to one of claims 2 to 7 is employed.

## Revendications

1. Matière adhésive et/ou d'étanchéité à un seul composant, qui est pompable et stable à la conservation ou stockage à des températures allant jusqu'à 30°C,
à base d'un prépolymère de polyuréthanne qui, par rapport au prépolymère, contient 0,1 et 15% en poids, de radicaux isocyanate réactifs, libres, et au moins un durcisseur thermoactivable comportant au moins deux radicaux fonctionnels, identiques ou différents, contenant de l'hydrogène,
caractérisée en ce que le rapport stoechiométrique entre les radicaux isocyanate libres du prépolymère et le durcisseur varie de 20:1 à 1,05:1, en sorte que, lors d'un chauffage jusqu'à 60°C à 180°C, seule une réticulation partielle soit possible et que se forme un produit à propriétés très visqueuses à plastiques.

2. Matière suivant la revendication 1, caractérisée en ce que le rapport stoechiométrique entre les radicaux isocyanate réactifs, libres du prépolymère et l'au moins un durcisseur activable par chauffage de la matière jusqu'à 60°C à 180°C varie de 10:1 à 2:1.

3. Matière suivant la revendication 1 ou 2, caractérisée en ce qu'elle contient deux durcisseurs thermoactivables, l'un de ces durcisseurs étant activable à une température de 60°C à 100°C et l'autre des deux durcisseurs étant activable à une température de 130°C à 200°C, et en ce que le durcisseur activable à la température la plus basse se présente en un rapport stoechiométrique entre les radicaux isocyanate réactifs, libres du prépolymère au durcisseur de 20:1 à 1;05:1.

4. Matière suivant l'une quelconque des revendications 1 à 3, caractérisée en ce que le prépolymère est présent en une proportion de 10 à 95% en poids, de préférence 40 à 70% en poids, par rapport au poids total de la matière.

5. Matière suivant l'une quelconque des revendications 1 à 4, caractérisée en ce qu'elle contient complémentairement encore
- au moins un plastifiant, de préférence en une proportion de 5 à 30% en poids, plus particulièrement de 10 à 20% en poids, et/ou
- au moins un agent de thixotropie, de préférence en une proportion de 3 à 30% en poids, plus particulièrement de 10 à 20% en poids, et/ou
- au moins une charge, de préférence en une proportion de 5 à 50% en poids, plus particulièrement de 10 à 20% en poids, et/ou
- au moins un adjuvant ou additif, de préférence en une proportion de 0,01 à 7% en poids,
où les pourcentages précités se rapportent à la matière totale.

6. Matière suivant l'une quelconque des revendications 1 à 5, caractérisée en ce que le prépolymère de polyuréthanne, qui présente de 0,1 à 15% en poids par rapport au prépolymère de radicaux isocyanate réactifs, libres est constitué des composants suivants :
a) des diisocyanates aromatiques, et/ou
b) des diisocyanates aliphatiques ou cycloaliphatiques, et
c) des polyols d'une plage de poids moléculaires de 400 à 10 000, de préférence de 1000 à 6000, avec chaque fois au moins deux radicaux OH primaires et/ou secondaires terminaux.

7. Matière suivant l'une quelconque des revendications 1 à 6, caractérisée en ce qu'elle contient, à titre de durcisseur, du dicyandiamide ou le sel complexe du chlorure de sodium du 4,4'-diaminodiphénylméthane.

8. Procédé de fabrication de la matière adhésive et/ou d'étanchéité à un seul composant selon la revendication 1, caractérisé en ce que l'on met en oeuvre au préalable le prépolymère de polyuréthanne qui contient de 0,1 à 15% en poids, par rapport au prépolymère, de radicaux isocyanate réactifs, libres dans des conditions exemptes d'eau et en ce qu'on le mélange avec l'au moins un durcisseur thermoactivable à des températures allant jusqu'à 40°C au maximum, de manière à maintenir un rapport stoechiométrique entre les radicaux isocyanate réactifs, libres du prépolymère et le durcisseur de 20:1 à 1,05:1, en sorte que, lors d'un chauffage de la matière jusqu'à des températures de 60°C à 180°C, ne se produise seulement qu'une réticulation partielle du prépolymère avec formation d'un produit très visqueux à plastique à la température ambiante.

9. Procédé suivant la revendication 8, caractérisé en ce que l'on met le prépolymère en oeuvre au préalable, on le mélange ensuite de manière homogène à au moins un plastifiant et/ou au moins un agent de thixotropie et/ou au moins une charge et/ou au moins un adjuvant ou additif et on y ajoute ensuite l'au moins un durcisseur thermoactivable à des températures allant jusqu'à 40°C au maximum et on l'y mélange de manière homogène.

10. Procédé suivant la revendication 8 ou 9, caractérisé en ce que l'on fabrique une matière suivant l'une quelconque des revendications 2 à 7.

11. Procédé pour coller et/ou rendre étanche un ou plusieurs matériaux de nature ou structure identique ou différente en un produit composite ou stratifié, en recourant à l'emploi d'une matière adhésive et/ou d'étanchéité à un seul composant selon la revendication l, caractérisé en ce que, après l'application, le durcissement complet du produit partiellement réticulé s'effectue
a) par la réaction du produit partiellement réticulé avec de l'eau, et/ou
b) dans le cas de la présence éventuelle d'un durcisseur thermoactivable supplémentaire, dont la température d'activation est supérieure à celle du premier durcisseur thermoactivable, par une étape de chauffage subséquente,
où la matière totalement et complètement durcie présente des propriétés élastiques.

12. Procédé selon la revendication 11, caractérisé en ce que l'on chauffe la matière adhésive et/ou d'étanchéité avant son application jusqu'à une température de 60°C à 180°C, de préférence de 80°C à 150°C, plus particulièrement de 90°C à 110°C, pendant la durée nécessaire pour que la matière présente, en raison de la réticulation partielle, des propriétés très visqueuses à plastiques, mesurées à la température ambiante, on l'applique ensuite sur les matériaux à coller et/ou à étancher dans la plage de températures précitée et on entreprend ensuite le durcissement complet de la matière partiellement réticulée sous l'effet d'eau, de préférence de la vapeur d'eau et/ou, dans le cas où est présent dans la matière un durcisseur thermoactivable complémentaire dont la température d'activation est supérieure à celle du premier durcisseur thermoactivable, on entreprend le durcissement complet par un chauffage subséquent, de préférence jusqu'à une température qui varie dans la plage de 130 à 200°C.

13. Utilisation de la matière adhésive et/ou d'étanchéité à un seul composant selon la revendication 1, caractérisée en ce que les matériaux à coller et/ou à rendre étanches sont choisis dans le groupe formé par le verre, les métaux, les alliages de métaux, les matières plastiques, les matériaux de construction, ainsi que le bois, où la matière s'utilise de préférence pour l'incorporation et/ou le collage de glaces de véhicules automobiles.

14. Utilisation selon la revendication 13, caractérisée en ce que l'on utilise une matière adhésive et/ou d'étanchéité selon l'une quelconque des revendications 2 à 7.
